# EUROPÄISCHE PATENTSCHRIFT

(11) **EP 2 855 269 B1**
(45) Veröffentlichungstag und Bekanntmachung des Hinweises auf die Patenterteilung: **09.08.2017**
(21) Anmeldenummer: 13725277.1
(22) Anmeldetag: 24.05.2013
(51) Int. Cl.: B60N 2/02, B60N 2/22, B60N 2/68, B64D 11/06

(54) **FLUGZEUGSITZ**
AIRCRAFT SEAT
SIÈGE D'AVION

(30) Priorität: 24.05.2012 DE 102012208724
(43) Veröffentlichungstag der Anmeldung: 08.04.2015
(73) Patentinhaber: Lufthansa Technik AG, 22335 Hamburg (DE)
(72) Erfinder: THOMASCHEWSKI, Oliver, 22846 Norderstedt (DE)
(74) Vertreter: Müller Verweyen
(86) Internationale Anmeldenummer: PCT/EP2013/001529
(87) Internationale Veröffentlichungsnummer: WO 2013/174519

(56) Entgegenhaltungen:
- EP-A1- 2 028 041
- WO-A1-92/12024
- WO-A1-2007/003889
- WO-A2-2009/079668
- US-A- 3 880 463

## Beschreibung

Die Erfindung betrifft einen Flugzeugsitz mit einer Lehnenbaugruppe.

Flugzeugsitze für Passagiere weisen, insbesondere bei VIP Flugzeugsitzen mit einem gehobenen Komfortstandard, ein hohes Gewicht auf. Weiterhin beanspruchen die VIP-Flugzeugsitze ein großes Raumvolumen in der Flugzeugkabine, was in der begrenzten Flugzeugkabine nachteilig ist. Zudem begrenzen die bekannten auf Komfort ausgelegten, voluminösen VIP-Flugzeugsitze die Gestaltungsmöglichkeiten in der Anordnung von Sitzen und Möbeln in der Flugzeugkabine.

Aus der WO 2009/079668 A2 ist ein Fahrzeugsitz bekannt, der eine Rückenlehne mit einem zentralen Element aufweist. An dem zentralen Element sind verschiebbare Wirbelelemente angeordnet, an denen wiederum Flügelelemente befestigt sind, die für den Passagier als Anlehnfläche dienen.

Weiter offenbart die WO 92/12024 A1 einen Passagiersitz mit einer zweiteiligen Rückenlehne, wobei die Teile der Rückenlehne entlang einer zentralen Schiene in ihrer Höhe verstellt werden können. Ferner ist das untere der beiden Teile der Rückenlehne drehbar gelagert, so dass es als erhöhte Sitzfläche umfunktioniert werden kann. Der Passagiersitz kann so als Kindersitz umfunktioniert werden.

Die Gestaltungsfreiheit, um unterschiedliche Sitzausführungen auf einer gemeinsamen mechanischen Basis bzw. einem Gestell auszuführen, beschränkt sich bisher auf ein Minimum, so dass Anpassungen des äußeren Erscheinungsbilds regelmäßig eine Neukonstruktion erforderlich machen. Die üblichen konstruktiven Maßnahmen erlauben nur eine begrenzte gestalterische Freiheit für die Sitzgestaltung.

Die Aufgabe der Erfindung ist es, einen Flugzeugsitz mit einer Lehnenbaugruppe anzugeben, der die oben genannten Nachteile überkommt.

Die Aufgabe der Erfindung wird ausgehend von dem Oberbegriff des Anspruchs 1 durch dessen kennzeichnende Merkmale gelöst. An einem Flugzeugsitz mit einer Lehnenbaugruppe umfasst die Lehnenbaugruppe erfindungsgemäß einen zentralen, durchgehenden und sich bis in den oberen Lehnenbereich erstreckenden Träger. Die Lehnenbaugruppe ist über den Träger mittig mit einer Sitzbodenbaugruppe verbunden. Weiterhin umfasst die Lehnenbaugruppe eine Mehrzahl von Polsterträgerelementen, wobei die Polsterträgerelemente an dem Träger im Wesentlichen separat angeordnet sind und den zentralen Träger beidseitig überragen. Ferner weist der Träger eine verstellbare Knickeinrichtung auf.

Der Flugzeugsitz mit einer Lehnenbaugruppe erreicht auf diese Weise eine mechanische Grundstruktur, die alle zu erwartenden mechanischen Lasten aufnimmt, und minimale Grundabmessungen für eine maximale Gestaltungsfreiheit aufweist. Die Verwendung unterschiedlicher Polsterträgerelemente, die an dem zentralen Träger angeordnet sind, erlaubt eine hohe Gestaltungsfreiheit für den Flugzeugsitz von puristisch bis pompös, ohne dass eine Veränderung der mechanischen Grundstruktur und somit auch der luftfahrtrechtlichen Zulassung notwendig ist. Es können dünne Polsterträger verwendet werden, wodurch der Flugzeugsitz einen geringen Bauraum benötigt.

Die Verbindung von der Sitzbodenbaugruppe des Flugzeugsitzes zu dem Träger kann auch über ein Zwischenstück erfolgen, welches der mittigen Anordnung des Trägers nicht entgegensteht.

Durch eine verstellbare Knickeinrichtung kann der obere Lehnenbereich in Richtung des Sitzenden bewegt werden. Dadurch kann auf eine separate Tiefenverstellung einer Kopfstütze verzichtet werden. Es wird in vorteilhafter Weise eine Möglichkeit mit dem Flugzeugsitz erreicht, in entspannter Position zu lesen oder auf einen Monitor zu schauen.

Vorzugsweise weist der Träger eine Breite von weniger als 200 mm auf. Der schmale, zentrale Träger ist für die Gestaltungsfreiheit vorteilhaft, da dadurch minimalistische Ausführungsformen ermöglicht werden. Die vom Passagier wahrgenommene Sitzbreite ergibt sich aus den Polsterträgerelementen, die den zentralen Träger überragen.

In einer bevorzugten Ausführungsform ist der Übergang zwischen dem Träger und der Sitzbodenbaugruppe winkelverstellbar. Eine Winkelverstellung zwischen dem Träger und der Sitzbodenbaugruppe erlaubt verschiedene Sitzstellungen für den Passagier, die sich positiv auf den Sitzkomfort auswirken.

Vorteilhafterweise ist wenigstens ein Polsterträgerelement um mindestens 1° gegenüber dem Träger federbelastet rotierbar. Dies ermöglicht dünnere Polsterträgerelemente mit dünnen Polstern an der Lehnenbaugruppe, ohne den Komfort für den Passagier zu beschränken. Die Rotierbarkeit übernimmt die Nachgiebigkeit großer Polsterdicken, wodurch an der Lehnenbaugruppe ohne Komforteinbußen auf dicke Polsterungen verzichtet werden kann. Hierdurch kann ein leichterer Flugzeugsitz mit geringerer Brandlast und geringem Bauvolumen erreicht werden. Das geringe Bauvolumen ermöglicht wiederum neue Gestaltungsmöglichkeiten in der Flugzeugkabine und eine bessere Raumausnutzung.

In einer vorteilhaften Ausführungsform weist die federbelastete Rotierbarkeit der Polsterelemente eine individuelle Begrenzung der Rotation und eine individuelle Rückstellkraft auf. Die federbelastete Rotation ist begrenzt, um die Nachgiebigkeit sinnvoll zu begrenzen und dem Passagier Halt geben zu können. Die Begrenzung der Rotation und die Rückstellkraft in die unbelastete Grundstellung können hierbei entlang der Lehnenbaugruppe individuell unterschiedlich von Vorteil sein, um eine gute Anpassung an die Bewegungsfreiheit, Hebel- und Kraftverhältnisse und Komfortanforderung des Passagiers und insbesondere an den Rücken des Passagiers zu ermöglichen.

Weiterhin weist der Flugzeugsitz vorteilhafterweise mindestens ein pneumatisches Modul zwischen mindestens einem Polsterträgerelement und dem Träger auf. Das pneumatische Modul kann hierbei ein gasdichtes Behältnis sein, das mit einem veränderbaren Druck beaufschlagt werden kann. Das pneumatische Modul ist vorzugsweise derart gestaltet, dass eine federbelastete Rotation des entsprechenden Polsterträgerelements ermöglicht wird. Weiterhin kann das pneumatische Modul in Abhängigkeit seines inneren Gasdrucks eine unterschiedliche Rückstellkraft aufweisen.

In einer weiteren vorteilhaften Ausführungsform sind die Polsterträgerelemente im oberen Drittel der Lehnenbaugruppe für eine beidseitige Klappbewegung in Richtung eines Sitzenden um mindestens 5° nach vorne eingerichtet. Mit der beidseitigen Klappbewegung kann die Bewegungsfreiheit für den Passagier im oberen Drittel der Lehnenbaugruppe eingeschränkt werden. Dies kann beispielsweise beim Schlafen oder Ruhen des Passagiers gewünscht sein. Durch die beidseitige Klappbewegung kann auf ein Kissen oder eine weitere entsprechende Polsterung in diesem Bereich verzichtet werden.

Vorzugsweise ist die Rotation der Polsterträgerelemente wenigstens im oberen Drittel der Lehnenbaugruppe feststellbar. Feststellbar bedeutet in diesem Zusammenhang, dass die Rotation in wenigstens einer Stellung blockierbar oder lösbar zu fixieren ist. Die Feststellung ist insbesondere für kritische Flugsituationen, wie beispielsweise Start, Landung oder Rollen, zweckmäßig, um bei einem möglichen Unfall mit entsprechenden auf den Passagier und den Flugzeugsitz einwirkenden Beschleunigungen eine Verstärkung des seitlichen Ausweichens eines Passagiers zu verhindern. Der Flugzeugsitz weist daher bei einer Feststellung der Polsterträgerelemente keine Nachgiebigkeit auf Basis der federbelasteten Rotierbarkeit auf, was sich positiv auf die Sicherheit des Flugzeugsitzes auswirkt. Das pneumatische Modul kann in einer möglichen Ausführungsform derart gestaltet sein, dass die Feststellung der Rotation der Polsterträgerelemente wenigstens im oberen Drittel der Lehnenbaugruppe in Abhängigkeit des pneumatischen Moduls erreicht werden kann.

Die Polsterträgerelemente sind in einer vorteilhaften Ausführungsform an den freien Enden flexibel miteinander verbunden. Die flexible Verbindung kann eine biegeschlaffe und/oder elastische Verbindung sein, welche beispielsweise über eine Seilverbindung realisiert werden kann, welche separat beidseitig an den beiden freien Enden der Polsterträgerelemente vorgesehen ist. Durch die flexible Verbindung können mechanische Lasten, die nur auf ein Polsterträgerelement einwirken, auf die anderen Polsterträgerelemente übertragen werden, so dass ein Überschreiten von Schädigungsgrenzen verhindert wird, was sich positiv auf das notwendige Strukturgewicht auswirkt. Weiterhin kann die flexible Verbindung genutzt werden, um die Rotationsfreiheit der Polsterträgerelemente zu beschränken. Die Beschränkung kann feststellbar bzw. lösbar sein. Weiterhin kann eine mechanische Kopplung der Rotationsbewegung mehrerer Polsterträgerelemente erreicht werden.

Vorzugsweise sind die Polsterträgerelemente lösbar an dem Träger angeordnet. Die lösbare Anordnung ermöglicht einen einfachen Austausch der Polsterträgerelemente zur Reinigung oder Reparatur. Weiterhin kann der Umbau eines Flugzeugsitzes in eine andere Gestaltungsform aufgrund der Lösbarkeit in einfacher Weise ausgeführt werden.

Weiterhin vorzugsweise sind die Polsterträgerelemente senkrecht zu einer Längsachse von dem Träger lösbar. Auf diese Weise können die Polsterträgerelemente einzeln und unabhängig von dem Träger gelöst und ausgetauscht werden, was eine gute Montierbarkeit ermöglicht.

Weiterhin ist die Lehnenbaugruppe vorzugsweise zur Befestigung von Polsterträgerelementen unterschiedlicher Breiten, Dicken und/oder Formen eingerichtet. Dies kann z.B. durch verschiedene Befestigungspunkte der Polsterträgerelemente in unterschiedlichen Höhen, oder auch durch verschiedene Befestigungspunkte in unterschiedlicher Tiefe senkrecht zu der Längsachse des Trägers verwirklicht werden. Die Polsterträgerelemente mit aufgesetzten Polstern können unterschiedliche Breiten, Dicken und Formen aufweisen, um einen unterschiedlichen äußeren Gestaltseindruck bei dem Passagier hervorzurufen. Dies ermöglicht eine große Variantenvielfalt mit unterschiedlichen äußeren Erscheinungsbildern, ausgehend von geringen Mindeststrukturabmessungen des Flugzeugsitzes.

Vorzugsweise weist die Lehnenbaugruppe in der oberen Hälfte einen Anschlagspunkt für einen Sicherheitsgurt auf. Die Anordnung eines Anschlagspunkts für einen Sicherheitsgurt in der oberen Hälfte der Lehnenbaugruppe ermöglicht einen Drei-Punkt-Gurt. Alternativ können auch zwei oder mehr Anschlagspunkte in der oberen Hälfte angeordnet sein. Dies ermöglicht einen höheren Sicherheitsstandard, insbesondere im Fall eines Unfalls mit einem in Flugrichtung sitzenden Passagier. Darüber hinaus kann durch die Verwendung eines solchen Anschlagspunkts ein Sicherheitsgurt im Brustbereich des Sitzenden angreifen, was die Bewegungsenveloppe des Passagiers bei einem Unfall verkleinert, wodurch etwaige Möbel, Tische oder sonstige Einbauten in der Kabine näher am Sitzenden, insbesondere am Kopf des Sitzenden, angeordnet werden können, ohne dass es zu Kollisionen mit Verletzungen kommt.

Die Lehnenbaugruppe ist bevorzugt zusammen mit einer Sitzfläche der Sitzbodenbaugruppe wippbar. Die Wippbarkeit erlaubt ein aktives Sitzen und ermöglicht eine hohe Nachgiebigkeit des Sitzes mit geringen Polsterdicken. Die Wippbarkeit erfolgt vorzugsweise von Lehnenbaugruppe und Sitzfläche bei einem festen Winkel gemeinsam, so dass durch die Wippbewegung keine Relativbewegung zwischen Sitzfläche und Rückenlehne des Flugzeugsitzes hervorgerufen wird. Die mögliche Verstellbarkeit des Winkels zwischen Sitzfläche und Rückenlehne bleibt hiervon unberührt. Die Wippbewegung ist vorzugsweise federbelastet und kann in bevorzugten Ausführungsformen durch den Passagier festgestellt werden, was in kritischen Flugphasen, wie beispielsweise Start, Landung oder Rollen, die Sicherheit des auf dem Flugzeugsitz sitzenden Passagiers erhöhen kann.

In einer weiteren vorteilhaften Ausführungsform ist der Träger zur Aufnahme elektrischer, pneumatischer und/oder mechanischer Leitungen eingerichtet. Der Träger kann auf diese Weise genutzt werden, um mit Hilfe der Leitungen beispielsweise elektrische Leistung, elektronische Daten oder mechanische Kräfte entlang der Rückenlehne für verschiedene mögliche Einbauten zu übertragen. Mechanische Kräfte können beispielsweise durch Zug- oder Druckstäbe, Zugseile und/oder pneumatische und/oder hydraulische Leitungen übertragen werden.

Die folgenden Merkmale sind auch unabhängig von der Erfindung selbstständig erfinderisch.

Erfinderisch ist ein Flugzeugsitz mit einer Lehnenbaugruppe und einer Sitzbodenbaugruppe, wobei die Lehnenbaugruppe mit einer Sitzbodenbaugruppe verbunden ist, und die Sitzbodenbaugruppe ein Wippgelenk aufweist.

Das Wippgelenk kann eine Wippbewegung des Flugzeugsitzes ermöglichen, die für den Sitzenden einen hohen Eindruck einer Nachgiebigkeit des Flugzeugsitzes bei geringen Polsterdicken ermöglicht. Auf diese Weise wird ein komfortabler Flugzeugsitz mit geringer Abmessung und Masse ermöglicht.

Weiterhin weist der Übergang zwischen Lehnenbaugruppe und der Sitzbodenbaugruppe vorzugsweise einen verstellbaren Winkel auf. Der verstellbare Winkel erlaubt verschiedene fixierte Sitzwinkel zwischen Rückenlehne und Sitzfläche, was unterschiedliche Sitzpositionen ermöglicht und in Kombination mit der Wippbarkeit durch das Wippgelenk einen Flugzeugsitz mit hoher Bequemlichkeit und geringem Gewicht ermöglicht.

Das Wippgelenk ist unterhalb der vorderen Hälfte der Sitzfläche angeordnet. Hierdurch ergibt sich neben einer möglichen vereinfachten Federanordnung im Lastpfad unter dem Sitzenden eine positive Kinematik, die insbesondere das Aufstehen aus dem Flugzeugsitz aus Liegepositionen oder liegenahen Positionen vereinfacht.

In einer bevorzugten Ausführungsform ist das Wippgelenk blockierbar. Die Wippbarkeit der Sitzfläche und der Rückenlehne kann so beispielsweise für kritische Flugphasen aufgehoben werden, um eine erhöhte Sicherheit für einen möglichen Unfall ermöglichen zu können.

Vorzugsweise sind mindestens zwei Polsterträgerelemente entlang des zentralen Trägers verschiebbar angeordnet. Die verschiebbaren Polsterträgerelemente ermöglichen eine Einstellung ihrer Position zum Rücken eines Sitzenden. Es kann daher beispielsweise ein Polsterträgerelement für den Lordosenbereich vorgesehen sein und durch die Verschiebung des im Wesentlichen separat angeordneten Polsterträgerelements vom Sitzenden in eine entsprechende Position verschoben werden. Weiterhin ist es bevorzugt, dass mehrere Polsterträgerelemente in Gruppen bzw. als Paar entlang des zentralen Trägers verschoben werden können. In einer weiteren vorteilhaften Ausführungsform weist der zentrale Träger eine Teleskopfunktion auf. Hierdurch kann die Länge des zentralen Trägers und somit auch die Höhe der Lehnenbaugruppe verstellt werden. Vorzugsweise ist mindestens ein Polsterträgerelement entsprechend der Verlängerung des zentralen Trägers in Richtung der Verlängerung verschiebbar. Auf diese Weise kann eine Anpassung der Lehnenbaugruppe an die Rückenhöhe eines Sitzenden ermöglicht werden. Hierbei ist es vorteilhaft, wenn zwei Gruppen von Polsterträgerelementen im Verbund entlang des zentralen Trägers verschoben werden können. Es ergeben sich somit vorzugsweise drei Gruppen von Polsterträgerelementen, welche innerhalb der Gruppe einen konstanten Abstand zueinander aufweisen. Die unterste Gruppe ist hierbei fest und im Bereich der Sitzbodenbaugruppe angeordnet. Die oberen beiden Gruppen sind vorzugsweise verschiebbar, so dass sich an zwei Bereichen entlang des zentralen Trägers variable Abstände zwischen jeweils zwei Polsterträgerelementen ergeben. Insbesondere die obere Gruppe kann auch nur aus einem Polsterträgerelement gebildet werden.

Die Erfindung wird im Folgenden anhand bevorzugter Ausführungsformen unter Bezugnahme auf die beigefügten Figuren erläutert. Dabei zeigt:
- Fig. 1: Flugzeugsitz mit einer Lehnenbaugruppe in einer Seitendarstellung;
- Fig. 2: Lehnenbaugruppe mit Polsterträgerelement in Draufsicht;
- Fig. 3: Lehnenbaugruppe mit beidseitigem Klappen der Polsterträgerelemente im oberen Drittel;
- Fig. 4: Lehnenbaugruppe mit zwei pneumatischen Modulen bei festgestellter Rotation des Polsterträgerelements;
- Fig. 5: Lehnenbaugruppe mit zwei pneumatischen Modulen bei freigegebener Rotation des Polsterträgerelements;
- Fig. 6: Flugzeugsitze mit unterschiedlichen Polsterträgerelementen an der Lehnenbaugruppe; und
- Fig. 7: Flugzeugsitz mit zwei Polsterträgerelementen.

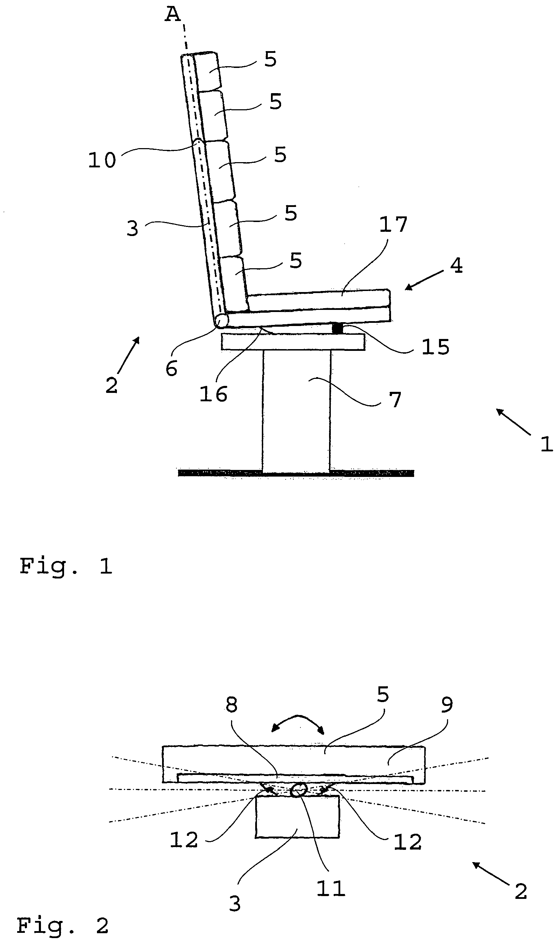

In Fig. 1 ist ein Ausführungsbeispiel eines Flugzeugsitzes 1 mit einer Lehnenbaugruppe 2 in einer seitlichen Ansicht dargestellt. Der Flugzeugsitz 1 weist weiterhin eine Sitzbodenbaugruppe 4 mit einer Sitzfläche auf. Die Lehnenbaugruppe 3 ist mit der Sitzbodenbaugruppe 4 über einen Übergang 6 miteinander verbunden. Die Sitzbodenbaugruppe ist über eine Sitzunterbaugruppe 7 mit der Bodenstruktur des Flugzeuges verbunden.

Die Lehnenbaugruppe 2 weist einen zentralen Träger 3 auf, der mittig an der Sitzbodenbaugruppe 4 angeordnet ist. Der Übergang 6 zwischen Sitzbodenbaugruppe 4 und Lehnenbaugruppe 2 bzw. Träger 3 ist in einem vorteilhaften Ausführungsbeispiel winkelverstellbar.

An dem zentralen Träger 3 sind mehrere Polsterträgerelemente 5 angeordnet, die den Träger 3 seitlich überragen. Die Polsterträgerelemente 5 bestehen im Wesentlichen aus einem Strukturteil 8, das die Polsterung 9 trägt und mit dem zentralen Träger 3 mit Hilfe geeigneter Mittel mechanisch verbunden ist. Die Polsterträgerelemente 5 sind vorteilhafterweise lösbar mit dem Träger 3 verbunden, so dass diese ausgetauscht werden können. Die Polsterträgerelemente 5 sind vorzugsweise derart befestigt, dass sie senkrecht zu einer Längsachse A von dem Träger 3 lösbar sind und seitlich von dem Träger 3 abgenommen werden können. Es müssen daher beispielsweise nicht alle über einem auszutauschenden Polsterträgerelement 5 liegenden Polsterträgerelemente 5 zunächst gelöst und abgenommen werden, bevor der eigentlich geplante Austausch möglich ist.

Im Ausführungsbeispiel in Fig. 1 sind an dem Träger 3 der Lehnenbaugruppe 2 fünf Polsterträgerelemente 5 angeordnet. Es kann jedoch auch eine andere Anzahl Polsterträgerelemente 5 verwendet werden. Weiterhin sind verschiedene Dicken, Breiten und/oder Formen der Polsterträgerelemente 5 möglich.

Die Polsterträgerelemente 5 sind im Wesentlichen separat angeordnet, so dass einzelne Polsterträgerelemente 5 unabhängig von anderen von dem Träger 3 lösbar sind. Eine geschlossene Lehnenoberfläche kann beispielsweise über einen Überzug über mehrere oder alle Polsterträgerelemente 5 hergestellt werden, der eine geschlossene äußere Oberfläche der Lehne erzeugen kann.

Der Träger 3 weist in diesem Ausführungsbeispiel eine verstellbare Knickeinrichtung 10 auf, die ein Knicken des zentralen Trägers 3 an dieser Stelle ermöglicht. Die Knickrichtung ist aus der in Fig. 1 gezeigten Grundstellung in Richtung des Sitzenden, hier nicht dargestellt, bzw. in Richtung der Sitzvorderkante vorteilhaft, um eine für den Sitzenden angenehme Leseposition auch bei Verstellung des Winkels des Übergangs 6 in eine flachere Lehnenausrichtung zu ermöglichen.

An der Lehnenbaugruppe 2 können Armlehnen angeordnet sein. Weiterhin können Armlehnen allgemein am Flugzeugsitz 1 angeordnet sein, hierbei ist insbesondere eine mechanische Verbindung seitlich der Sitzfläche vorteilhaft.

Der in Fig. 1 dargestellte Flugzeugsitz 1 weist eine Lehnenbaugruppe 2 und eine Sitzbodenbaugruppe 4 auf. Die Sitzbodenbaugruppe 4 ist auf einem Sitzunterbau 7 angeordnet, der die mechanische Verbindung zu einer Bodenstruktur herstellt. Die Sitzbodenbaugruppe 4 weist ein Wippgelenk 15 auf, das in diesem vorteilhaften Ausführungsbeispiel im vorderen Drittel der Sitzfläche der Sitzbaugruppe 4 angeordnet ist. Das Wippgelenk 15 ermöglicht eine Wippbewegung der Sitzfläche 17 um eine Querachse des Flugzeugsitzes 1.

In einem bevorzugten Ausführungsbeispiel ist die Wippbewegung der Sitzfläche 17 auf 8° nach hinten und 2° nach vorne begrenzt. Weiterhin kann ein typischer Anstellwinkel eines Flugzeugs, in dem der Flugzeugsitz 1 verwendet wird, von 2° durch das Wippgelenk 15 kompensiert werden. Das Wippgelenk kann daher in Abhängigkeit von der Sitzausrichtung, d.h. mit Blickrichtung in oder entgegen der Flugrichtung, die Sitzfläche 17 im Reiseflug senkrecht zur Erdanziehungskraft ausrichten. Der Flugzeugsitz 1 kann daher soweit nach vorne kippen, so dass die Sitzfläche 17 nach vorne hin abfällt, was ein einfaches Aufstehen aus dem Flugzeugsitz ermöglichen kann. Dies wird weiterhin durch die vorteilhafte Anordnung des Wippgelenks 15 im vorderen Bereich der Sitzfläche 17 unterstützt.

In diesem vorteilhaften Ausführungsbeispiel ist die Wippbewegung federbelastet. Hierfür ist ein Federteil 16 vorgesehen, das eine entsprechende Federbelastung bewirken kann. Das Federteil 16 kann vorteilhafterweise im Bereich der hinteren Hälfte, zur Lehnenbaugruppe 2 hin, der Sitzfläche 17 angeordnet werden. Die Lehnenbaugruppe 2 umfasst die Rückenlehne des Flugzeugsitzes 1.

Die Wippbewegung oder auch Freiheit des Wippgelenks 15 kann in diesem vorteilhaften Ausführungsbeispiel durch einen Bediener blockiert werden, so dass eine feststehende Sitzposition des Flugzeugsitzes 1 in kritischen Flugphasen, wie Start, Landung oder Rollen, erreicht werden kann. Weiterhin ist ein Blockieren der Wippbewegung bei einer sehr flachen Sitzeinstellung mit großem Winkel zwischen Lehnenbaugruppe 2 und Sitzfläche 17 vorteilhaft, um den Flugzeugsitz 1 in einer Liegeposition fixieren zu können, da in diesem Anwendungsfall eine Wippbarkeit unerwünscht ist.

Der Übergang 6 zwischen der Lehnenbaugruppe 2 und der Sitzfläche 17 ermöglicht in diesem vorteilhaften Ausführungsbeispiel verschiedene Winkel. Der Sitzwinkel ist hierbei vorzugsweise standardmäßig fixiert und kann durch eine Betätigung eines Bedieners zum Verstellen des Sitzwinkels kurzzeitig freigegeben werden. In einer alternativen Ausführungsform wird die Verstellung des Sitzwinkels nach einer Betätigung durch einen elektrischen Antrieb ermöglicht. Der Sitzwinkel ist in bevorzugten Ausführungsbeispielen standardmäßig starr.

Die sich ergebende Kinematik ermöglicht einen komfortablen und leichten Flugzeugsitz 1 ohne die Verwendung einer aufwendigen und vor allem schweren Mechanik zur Kopplung der Bewegungen von Sitzfläche 17 und Lehnenbaugruppe 2, wie bei sogenannten Synchronstühlen, deren Prinzip mit der schweren Mechanik regelmäßig bei VIP-Flugzeugsitzen genutzt wird.

In Fig. 2 ist eine Lehnenbaugruppe 2 mit einem Polsterträgerelement 5 in Draufsicht dargestellt. Der zentrale Träger 3 wird seitlich von dem Polsterträgerelement 5 in beide Richtungen überragt. Das Polsterträgerelement 5 weist in diesem Ausführungsbeispiel ein Strukturteil 8 und eine Polsterung 9 auf, wobei die Polsterung 9 im Wesentlichen dem Rücken bzw. Hinterkopf eines Sitzenden, hier nicht dargestellt, zugewandt ist.

Die Polsterträgerelemente 5 sind gegenüber dem Träger 3 federbelastet rotierbar. Die Rotation kann um einen möglichen Drehpunkt 11 erfolgen, wobei der Drehpunkt dem Polsterträgerelement 5, dem Träger 3 oder der mechanischen Verbindung zwischen dem Polsterträgerelement 5 und dem Träger 3 zugeordnet werden kann. Die Federbelastung der Rotation ist schematisch durch die Federn 12 dargestellt. Alternative Anordnungen von Federn 12 oder vergleichbar wirkenden Mitteln sind möglich. Die Rotation ist in einem möglichen Ausführungsbeispiel mindestens 1° in beide Richtungen möglich. Weiterhin ist die Rotation in einem möglichen Ausführungsbeispiel auf 20° in beide Drehrichtungen begrenzt. Weitere, hiervon abweichende Begrenzungen der Rotation sind ebenfalls, auch bei jeweiligen anderen an einer Lehnenbaugruppe 2 angeordneten Polsterträgerelementen 5, möglich. Dies kann zu einer unterschiedlich starken Rotierbarkeit der Polsterträgerelemente 5 entlang des Trägers 3 führen, was eine anatomische Anpassung der Lehnenbaugruppe 2 ermöglicht.

Weiterhin ist die Federbelastung und/oder auch Dämpfung der Rotation der Polsterträgerelemente 5 gegenüber dem Träger 3 unabhängig von der Rotierbarkeit bzw. dem rotierbaren Winkelbereich. In einem vorteilhaften Ausführungsbeispiel ist die Rückstellkraft der Rotation im oberen Lehnenbereich geringer als im unteren Lehnenbereich. Weiterhin kann es vorteilhaft sein, wenn die Rotationsbegrenzung den Polsterträgerelementen 5 im oberen Bereich einen größeren Freiheitsgrad ermöglicht als im unteren Bereich. Der Verlauf der Rückstellung in Abhängigkeit der Rotationsstellung aus der in Fig. 2 gezeigten Grundstellung kann individuell für jedes Polsterelement verschieden sein.

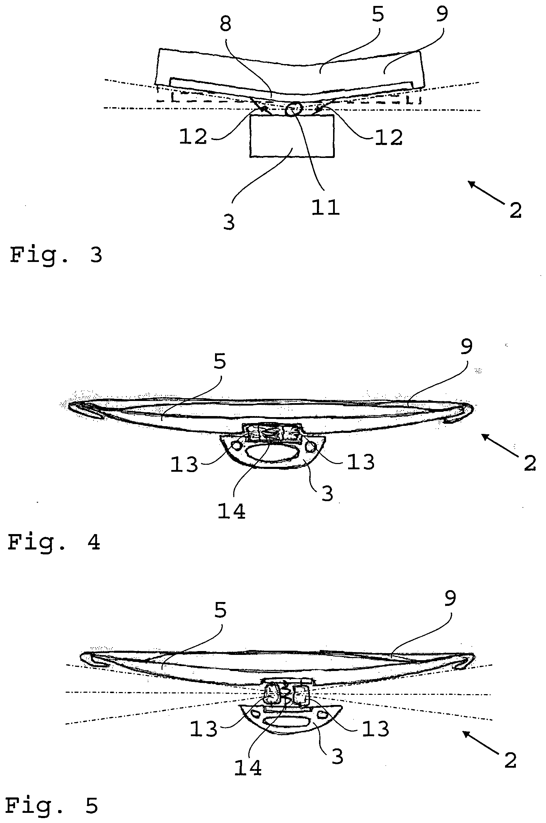

In Fig. 3 zeigt ein Ausführungsbeispiel eine Lehnenbaugruppe 2 mit beidseitigem Klappen eines Polsterträgerelements 5 im oberen Drittel der Lehnenbaugruppe 2. Teile dieses Polsterträgerelements 5 lassen sich beidseitig nach vorn in Richtung eines Sitzenden klappen, so dass in einfacher Weise eine seitliche Stützung des Kopfes des Sitzenden erfolgen kann. Die beidseitige Klappbewegung kann unabhängig von der Rotationsbewegung des Polsterträgerelements 5 erfolgen.

In der Fig. 4 und der Fig. 5 ist ein vorteilhaftes Ausführungsbeispiel für ein Polsterträgerelement 5 gezeigt, das an einem Träger 3 angeordnet und für eine federbelastete Rotation um mindestens 1° gegenüber dem Träger 3 eingerichtet ist. In Fig. 4 ist die Rotation des Polsterträgerelements 5 gegenüber dem Träger 3 blockiert. Fig. 5 zeigt das Polsterträgerelement 5 mit einer freigegebenen Rotierbarkeit gegenüber dem Träger 3. Die Polsterung 9 des Polsterträgerelements 5 ist in diesem Ausführungsbeispiel eine Elastomerpolsterung, die zwischen den seitlichen Enden des Polsterträgerelements 5 gespannt ist.

Zwischen dem Träger 3 und dem Polsterträgerelement 5 sind in dem Ausführungsbeispiel aus der Fig. 4 und der Fig. 5 zwei pneumatische Module 13 und eine Rückstellfeder 14 angeordnet. Die pneumatischen Module 13 sind gasdicht und können durch geeignete Mittel mit einem Überdruck beaufschlagt werden. Bei der Beaufschlagung der pneumatischen Module 13 mit einem Überdruck ergibt sich eine Druckkraft, die den Träger 3 und das Polsterträgerelement 5 auseinanderdrückt. Das pneumatische Modul 13 kann beispielsweise ein Gassack sein. Die Rückstellfeder 14 ist in diesem Ausführungsbeispiel eine Zugfeder, die dauerhaft eine Zugkraft zwischen dem Polsterträgerelement 5 und dem Träger 3 bewirkt.

In Fig. 4 ist der Überdruck in den pneumatischen Modulen 13 nicht vorhanden oder nicht ausreichend groß genug, um die entgegenwirkende Zugkraft der Rückstellfeder 14 zu überwinden. Das Polsterträgerelement 5 liegt somit an dem Träger 3 an, wodurch eine Rotation blockiert, und somit das Polsterträgerelement 5 festgestellt ist. Die festgestellte Position ist somit die Standardposition, die erreicht wird, wenn die pneumatischen Module 13 nicht mit Überdruck gegenüber dem Kabinendruck beaufschlagt werden, oder wenn ein Leck in der Pneumatik auftritt oder die pneumatischen Module 13 beschädigt sind. Vorteilhafterweise wird die Rotation erst bei einem Überdruck von mehr als einem Atmosphärendruck freigegeben, so dass bei einem möglichen Druckabfall in der Kabine eines Flugzeugs keine hieraus resultierende Freigabe der Rotation der Polsterträgerelemente 5 erfolgen kann.

In Fig. 5 weisen die pneumatischen Module 13 einen ausreichenden Überdruck auf, so dass sich diese ausdehnen oder auch aufgeblasen werden. Die Zugkraft der Rückstellfeder 14 wird dadurch überwunden, die Rückstellfeder 14 gelängt und die Rotation des Polsterträgerelements 5 durch eine Beabstandung zu dem Träger 3 freigegeben. Es ergibt sich eine federbelastete Rotierbarkeit des Polsterträgerelements 5 mit den entsprechenden Komfortvorteilen. Die Federbelastung der Rotation erfolgt in diesem Ausführungsbeispiel durch die pneumatischen Module 13, da jeweils ein pneumatisches Modul 13 bei einer Rotation des Polsterträgerelements 5 gegenüber dem anderen pneumatischen Modul 13 komprimiert wird, was eine entsprechende Rückstellkraft bewirkt.

In einem bevorzugten Ausführungsbeispiel kann durch die Einstellung des Überdrucks der pneumatischen Module 13 eine individuelle Rückstellkraft bei einer Rotation eines Polsterträgerelements 5 eingestellt werden. Dies kann für alle am Träger 3 angeordneten Polsterträgerelemente 5 in gleicher Weise und individuell unterschiedlich erfolgen. Weiterhin kann durch die Einstellung des Überdrucks und die dementsprechende Beabstandung des Polsterträgerelements 5 zum Träger 3 eine individuelle Begrenzung der Rotation erreicht werden.

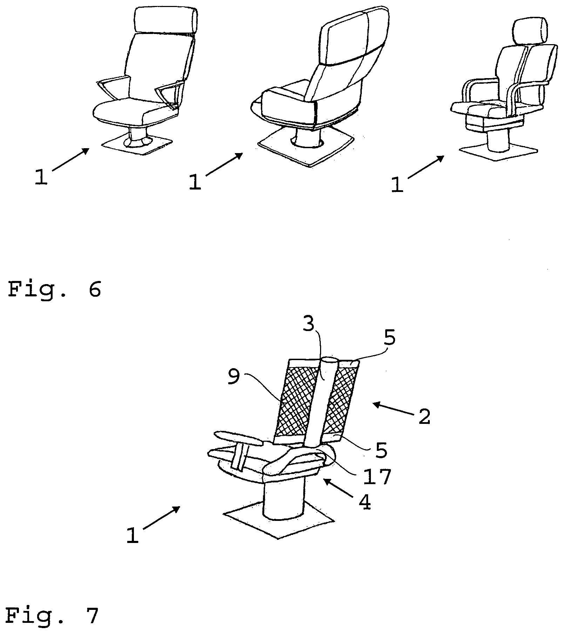

In Fig. 6 sind verschiedene Flugzeugsitze 1 mit einer Lehnenbaugruppe 2 gezeigt, die sich in den darin angeordneten Polsterträgerelementen 5 unterscheidet. Die Polsterträgerelemente 5 unterscheiden sich in ihrer Breite, Polsterstärke und Ausgestaltung. Es kann daher eine gemeinsame mechanische Basis genutzt werden, die in einfacher Weise unterschiedliche Gestaltungen eines Flugzeugsitzes 1 erlaubt, ohne dass zwingend eine erneute strukturelle Auslegung und luftfahrtrechtliche Zulassung erfolgen muss. Die in Fig. 1 gezeigten Flugzeugsitze 1 weisen weiterhin unterschiedliche Anbauteile, wie beispielsweise Armlehnen auf. Der Träger 3 kann, wie in Fig. 6 dargestellt, beispielsweise durch eine Umhüllung der gesamten Rückenlehne optisch verdeckt werden, so dass auch klassische Gestaltungsformen von VIP-Sitzen mit der Lehnenbaugruppe 2 realisierbar sind.

Fig. 7 zeigt eine weitere mögliche Ausführungsform eines Flugzeugsitzes 1, wobei die Verbindung zwischen der Sitzbodenbaugruppe 4 des Flugzeugsitzes 1 und dem Träger 3 über ein Zwischenstück 17 erfolgt, über das der Träger 3 mittig mit der Sitzbodenbaugruppe 4 verbunden ist. Das Zwischenstück 17 kann bogen- oder Y-förmig ausgeführt werden.

Weiterhin weist die Lehnenbaugruppe 2 im Ausführungsbeispiel der Fig. 7 zwei Polsterträgerelemente 5 auf. Die Polsterträgerelemente 5 sind hierbei am oberen und am unteren Lehnenbereich angeordnet, wobei die Polsterung 9 in diesem vorteilhaften Ausführungsbeispiel durch ein zwischen den Polsterträgerelementen 5 gespanntes Textil gebildet wird. Das Textil kann ein Tuch oder ein Netz sein, an das sich ein Sitzender mit seinem Rücken anlehnen kann. Dies ermöglicht einen leichten Flugzeugsitz 1.

## Patentansprüche

1. Flugzeugsitz (1) mit einer Lehnenbaugruppe (2), wobei
- die Lehnenbaugruppe (2) einen zentralen Träger (3) umfasst,
- die Lehnenbaugruppe (2) über den Träger (3) mittig mit einer Sitzbodenbaugruppe (4) verbunden ist, und
- die Lehnenbaugruppe (2) eine Mehrzahl von Polsterträgerelementen (5) umfasst, wobei
- die Polsterträgerelemente (5) an dem Träger (3) im Wesentlichen separat angeordnet sind, wobei
- die Polsterträgerelemente (5) den zentralen Träger (3) beidseitig überragen, **dadurch gekennzeichnet, dass**
- der Träger (3) eine verstellbare Knickeinrichtung (10) aufweist.

2. Flugzeugsitz (1) nach Anspruch 1, **dadurch gekennzeichnet, dass** der Träger (3) eine Breite von weniger als 200 mm aufweist.

3. Flugzeugsitz (1) nach einem der vorangehenden Ansprüche, **dadurch gekennzeichnet, dass** wenigstens ein Polsterträgerelement (5) um mindestens 1° gegenüber dem Träger (3) federbelastet rotierbar ist.

4. Flugzeugsitz (1) nach Anspruch 3, **dadurch gekennzeichnet, dass** die federbelastete Rotation der Polsterträgerelemente (5) eine individuelle Begrenzung der Rotation und eine individuelle Rückstellkraft aufweist.

5. Flugzeugsitz (1) nach einem der Ansprüche 3 oder 4, **dadurch gekennzeichnet, dass** der Flugzeugsitz (1) mindestens ein pneumatisches Modul (13) zwischen mindestens einem Polsterträgerelement (5) und dem Träger (3) aufweist.

6. Flugzeugsitz (1) nach einem der vorangehenden Ansprüche, **dadurch gekennzeichnet, dass** die Polsterträgerelemente (5) im oberen Drittel der Lehnenbaugruppe (2) für eine beidseitige Klappbewegung in Richtung eines Sitzenden um mindestens 5° nach vorne eingerichtet sind.

7. Flugzeugsitz (1) nach einem der Ansprüche 3 bis 6, **dadurch gekennzeichnet, dass** die Rotation der Polsterträgerelemente (5) wenigstens im oberen Drittel der Lehnenbaugruppe (2) feststellbar ist.

8. Flugzeugsitz (1) nach einem der vorangehenden Ansprüche, **dadurch gekennzeichnet, dass** die Polsterträgerelemente (5) an den freien Enden flexibel miteinander verbunden sind.

9. Flugzeugsitz (1) nach einem der vorangehenden Ansprüche, **dadurch gekennzeichnet, dass** die Polsterträgerelemente (5) lösbar an dem Träger (3) angeordnet sind.

10. Flugzeugsitz (1) nach Anspruch 9, **dadurch gekennzeichnet, dass** die Polsterträgerelemente (5) senkrecht zu einer Längsachse (A) von dem Träger (3) lösbar sind.

11. Flugzeugsitz (1) nach einem der vorangehenden Ansprüche, **dadurch gekennzeichnet, dass** die Lehnenbaugruppe (2) in der oberen Hälfte einen Anschlagspunkt für einen Sicherheitsgurt aufweist.

12. Flugzeugsitz (1) nach einem der vorangehenden Ansprüche, **dadurch gekennzeichnet, dass** die Lehnenbaugruppe (2) zusammen mit einer Sitzfläche (17) der Sitzbodenbaugruppe (4) wippbar ist.

13. Flugzeugsitz (1) nach einem der vorangehenden Ansprüche, **dadurch gekennzeichnet, dass** der Träger (3) zur Aufnahme elektrischer, pneumatischer und/oder mechanischer Leitungen eingerichtet ist.

14. Flugzeugsitz (1) nach einem der vorangehenden Ansprüche, **dadurch gekennzeichnet, dass** mindestens zwei Polsterträgerelemente (5) entlang des zentralen Trägers (3) verschiebbar angeordnet sind.

## Claims

1. Aircraft seat (1) comprising a backrest assembly (2), wherein
- the backrest assembly (2) includes a central support (3),
- the backrest assembly (2) is centrally connected to a seat surface assembly (4) via the support (3), and
- the backrest assembly (2) includes a plurality of cushion support members (5), wherein
- the cushion support members (5) are arranged on the support (3) essentially separately, wherein
- the cushion support members (5) project beyond the central support (3) on both sides, **characterized in that**
- the support (3) includes an adjustable bending mechanism (10).

2. Aircraft seat (1) according to claim 1, **characterized in that** the support (3) shows a width of less than 200 mm.

3. Aircraft seat (1) according to any one of the preceding claims, **characterized in that** at least one cushion support member (5) can be rotated in a spring-loaded manner by at least 1° in relation to the support (3).

4. Aircraft seat (1) according to claim 3, **characterized in that** the spring-loaded rotation of the cushion support members (5) includes an individual limitation of the rotation and an individual restoring force.

5. Aircraft seat (1) according to one of the claims 3 or 4, **characterized in that** the aircraft seat (1) includes at least one pneumatic module (13) between at least one cushion support member (5) and the support (3).

6. Aircraft seat (1) according to any one of the preceding claims, **characterized in that** the cushion support members (5) in the upper third of the backrest assembly (2) are configured for a both-sided folding movement towards a seated person by at least 5° to the front.

7. Aircraft seat (1) according to one of the claims 3 to 6, **characterized in that** the rotation of the cushion support members (5) can be locked at least in the upper third of the backrest assembly (2).

8. Aircraft seat (1) according to any one of the preceding claims, **characterized in that** the cushion support members (5) are flexibly connected to each other at their free ends.

9. Aircraft seat (1) according to any one of the preceding claims, **characterized in that** the cushion support members (5) are detachably attached to the support (3).

10. Aircraft seat (1) according to claim 9, **characterized in that** the cushion support members (5) can be detached from the support (3) perpendicular to a longitudinal axis (A).

11. Aircraft seat (1) according to any one of the preceding claims, **characterized in that** the backrest assembly (2) in the upper half includes an attachment point for a safety belt.

12. Aircraft seat (1) according to any one of the preceding claims, **characterized in that** the backrest assembly (2) can be tilted together with a seat surface (17) of the seat surface assembly (4).

13. Aircraft seat (1) according to any one of the preceding claims, **characterized in that** the support (3) is configured to mount electric, pneumatic and/or mechanical lines.

14. Aircraft seat (1) according to any one of the preceding claims, **characterized in that** at least two cushion support members (5) are arranged to be displaceable along the central support (3).

## Revendications

1. Siège d'avion (1) comprenant un agencement de dossier (2), dans lequel
- l'agencement de dossier (2) comprend un support central (3),
- l'agencement de dossier (2) est relié de manière centrale à un agencement de fond de siège (4) par l'intermédiaire du support (3) et dans lequel
- l'agencement de dossier (2) comprend une pluralité d'éléments porteurs de capitonnage (5), dans lequel
- les éléments porteurs de capitonnage (5) sont disposés sur le support (3) essentiellement de manière séparée, dans lequel
- les éléments porteurs de capitonnage (5) depassent de chaque côté le support central (3), **caractérisé en ce que**
- le support (3) présente un dispositif de flexion (10) réglable.

2. Siège d'avion (1) selon la revendication 1, **caractérisé en ce que** le support (3) présente une largeur de moins de 200 mm.

3. Siège d'avion (1) selon l'une quelconque des revendications précédentes, **caractérisé en ce qu'**au moins un élément porteur de capitonnage (5) est rotatif, sollicité par ressort, selon au moins 1° par rapport au support (3).

4. Siège d'avion (1) selon la revendication 3, **caractérisé en ce que** la rotation, sollicitée par ressort, des éléments porteurs de capitonnage (5) présente une limitation individuelle de la rotation et une force de rappel individuelle.

5. Siège d'avion (1) selon l'une quelconque des revendications 3 ou 4, **caractérisé en ce que** le siège d'avion (1) présente au moins un module pneumatique (13) entre au moins un élément porteur de capitonnage (5) et le support (3).

6. Siège d'avion (1) selon l'une quelconque des revendications précédentes, **caractérisé en ce que** les éléments porteurs de capitonnage (5), dans le tiers supérieur de l'agencement de dossier (2), sont agencés selon au moins 5° vers l'avant pour un mouvement de rabattement des deux côtés en direction d'une personne assise.

7. Siège d'avion (1) selon l'une quelconque des revendications 3 à 6, **caractérisé en ce que** la rotation des éléments porteurs de capitonnage (5) peut être bloquée au moins dans le tiers supérieur de l'agencement de dossier (2).

8. Siège d'avion (1) selon l'une quelconque des revendications précédentes, **caractérisé en ce que** les éléments porteurs de capitonnage (5) sont reliés entre eux de manière flexible au niveau des extrémités libres.

9. Siège d'avion (1) selon l'une quelconque des revendications précédentes, **caractérisé en ce que** les éléments porteurs de capitonnage (5) sont disposés de manière amovible sur le support (3).

10. Siège d'avion (1) selon la revendication 9, **caractérisé en ce que** les éléments porteurs de capitonnage (5) sont amovibles du support (3) perpendiculairement à un axe longitudinal (A).

11. Siège d'avion (1) selon l'une quelconque des revendications précédentes, **caractérisé en ce que** l'agencement de dossier (2) présente dans la moitié supérieure un point de butée pour une ceinture de sécurité.

12. Siège d'avion (1) selon l'une quelconque des revendications précédentes, **caractérisé en ce que** l'agencement de dossier (2) est basculable conjointement avec une surface d'assise (17) de l'agencement de fond de siège (4).

13. Siège d'avion (1) selon l'une quelconque des revendications précédentes, **caractérisé en ce que** le support (3) est agencé pour loger des conduites électriques, pneumatiques et/ou mécaniques.

14. Siège d'avion (1) selon l'une quelconque des revendications précédentes, **caractérisé en ce qu'**au moins deux éléments porteurs de capitonnage (5) sont disposés de manière déplaçable le long du support central (3).
